# EUROPEAN PATENT APPLICATION

(11) **EP 2 025 245 A1**
(43) Date of publication of application: **18.02.2009**
(21) Application number: 07015747.4
(22) Date of filing: 10.08.2007
(51) Int. Cl.: A23L 1/00, A23L 1/0522, A23G 4/20, A23G 4/06, A23G 3/54, A23G 3/34

(54) **Rice starch in sugar free coatings**

(71) Applicant: Südzucker Aktiengesellschaft Mannheim/Ochsenfurt, 68165 Mannheim (DE)
(72) Inventor: Kowakczyk, Jörg, 67304 Eisenberg/Steinborn (DE); Peters, Siegfried, 68647 Biblis (DE); Hasslinger, Bernard, 673316 Carlsberg (DE); Verhasselt, Eli, 1090 Jette (BE); Pittery, Kristof, 3850 Nieuwerkerken (BE)
(74) Representative: Schrell, Andreas

(57) **Abstract**

The present invention relates to sugarless coated confectionery products comprising a product core and a product coating, wherein the product coating comprises rice starch, at least one sugar alcohol and a panning additive, as well as methods and uses thereof.

## Description

The present invention relates to coated products, in particular sugarless coated products, comprising a product core and a product coating, wherein the product coating comprises rice starch, and to methods to obtain said products.

Coated products, in particular confectionery, such as coated chewing gums or coated soft caramels, have been known for a long while. They are generally composed of a core, which may be a filled or non-filled chewing gum portion, and a one or multi-layered coating surrounding said core. Due to the ever increasing demand of the customers for healthy confectionery, both in terms of tooth and body health, sugar free products are highly desired and known in the art.

For instance, EP 0 664 674 B1 discloses a dual composition multi-layered hard coated chewing gum comprising a gum centre and an outer coating comprising xylitol and hydrogenated isomaltulose, also called isomalt. EP 0 314 739 B1 discloses improved hard coated sugarless chewing gums comprising a sugarless chewing gum centre and a sugarless hard coating comprising isomalt, wherein the gum centre has a low water content. EP 1 139 777 B1 discloses processes for coating comestibles with a syrup and a powder, both of them preferably being isomalt. US 4,238,510 and US 4,317,838 disclose sugarless coatings containing sorbitol being applied to chewing gum pieces and other confectionery. US 2006/0051456 A1 discloses chewing gums including a liquid filled composition, which may also comprise a coating surrounding the filled chewing gum. The chewing gum portion of the product disclosed therein comprises at least one polyol, which aims to provide a liquid barrier which prevents the liquid fill from migration and premature release into the chewing gum mass surrounding the filling.

Thus, due to the use of sugar replacement agents, such as polyols, for instance isomalt, the prior art already provides tooth-friendly coated products. In addition, US 5,258,187 discloses food products, having a white coating of powdered rice starch and a coloured coating thereon. Said food product is said to be a sweet, a cake, a confectionery, in particular a chocolate or a chewing gum. The products obtained show an improvement in the appearance, in particular due to an improved degree of whiteness. WO 02/23997 discloses the use of a rice component, in particular rice starch as a coating composition on very specific food products, namely those which are frozen and subsequently cooked. Likewise, US 2002/0001643 discloses water-dispersible coating compositions for parfried foods containing high levels of rice and dextrine.

However, said coated products still do not meet the demands of those customers, which require sugarless confectionery products having particular organoleptic properties, in particular an improved and prolonged crunch provided by the coating. Due to the migration of components of the product core into the coating and due to the requirement to only use tooth-friendly ingredients, the crunch of prior art products is not satisfying or decreases significantly during storage. Furthermore, coloured prior art products very often show a quite inhomogenously distributed pigmentation.

The present invention is therefore based on the technical problem to provide coated confectionery products, in particular coated sugarless confectionery products, which overcome the above-identified disadvantages, in particular provide an improved crunch. In particular, it is one technical problem of the present invention to provide coated products, which show a prolonged crunch. It is furthermore a technical problem of the present invention to provide coated products, which display an improved, that means more evenly and homogenously distributed colouration. It is furthermore a technical problem of the present invention to provide coated products, which show an improved shelf life. It is furthermore part of the technical problem of the present invention to provide coated products which meet one or all of the above identified goals, while still being tooth-friendly, in particular being sugar free.

The present invention solves the above-identified technical problems by the provision of a teaching according to the main claim. In particular, the present invention solves its technical problem by providing coated confectionery products, in particular sugarless coated confectionery products, comprising a product core and a product coating, whereby the product coating comprises rice starch, at least one sugar alcohol and at least one panning additive. In a particularly preferred embodiment, the product coating comprises 1 to 50, preferably 5 to 30, most preferably 5 to 15, in particular 1 to 12, in particular 2 to 12, 3 to 12, 4 to 12, 5 to 12 or 6 to 12, preferably 7 to 12, most preferably 3 to 11, 4 to 11 or 5 to 11 weight-% rice starch based on dry weight of the product coating.

The coated products of the invention comprising rice starch display a particularly high degree of whiteness, in particular when the rice starch is combined in the coating with maltitol or xylitol. Advantageously, the conventionally frequently used compound TiO₂ can be replaced by rice starch to improve the whiteness degree of the coating. The invention also provides the advantage of providing a tooth-friendly confectionery, which surprisingly provides a long-lasting and improved crunch. Thus, the products containing rice starch as a coating ingredient show a significantly improved organoleptic and sensoric profile, in particular, an improved crunch. In addition, the coated products display a more homogenous distribution of colour. It was surprisingly found that due to the formation of a stabilising layer built up by the rice starch between the core and the coating, in particular at the boundary of the coating towards the core, the migration of core ingredients into the outer coating could be reduced, in particular of glycerine and xylitol. Thus, an improved crunchiness and improved storage stability could surprisingly be achieved.

In a preferred embodiment of the present invention, the sugarless coated confectionery product comprises a product core and a product coating, wherein the product coating comprises 1 to 50 weight-% rice starch, 25 to 95 weight-% of at least one sugar alcohol and 1 to 70 weight-% (each based on dry weight of the product coating) of at least one panning additive.

In a preferred embodiment of the present invention, the product coating comprises 5 to 30 weight-% rice starch (based on dry weight of the product coating).

In a preferred embodiment of the present invention, the product coating comprises 5 to 15 weight-% rice starch (based on dry weight of the product coating). In a particularly preferred embodiment, the use of such preferred amounts of rice starch leads to products, the coating of which provides a particularly improved sensoric profile. Furthermore, the use of these amounts of rice starch particularly enables a particularly improved coating process which is stabilised and wherein the cores are less sticky.

In a preferred embodiment of the present invention, the rice starch is selected from the group consisting of glutinous rice starch, non-glutinous rice starch, soluble glutinous rice starch, soluble non-glutinous rice starch and mixtures thereof.

In a particularly preferred embodiment of the present invention, the rice starch is a neutral waxy rice starch, in particular a neutral waxy rice starch powder. In a preferred embodiment, the rice starch of the present invention is a native rice starch, in particular prepared from cleaned, polished, waxy broken rice by extraction and purification of the starch. In a particularly preferred embodiment the rice starch is gluten free and in a further preferred embodiment non-allergenic. In a particularly preferred embodiment, the rice starch used is a rice starch of particularly high purity, in particular having a purity of at least 97% starch, preferably at least 98%, preferably at least 99% starch (based on dry weight). In a further preferred embodiment, the rice starch used is insoluble in cold water. In a further preferred embodiment, the rice starch used is insoluble in cold water and thickens in hot water. In a further preferred embodiment, the rice starch used has in a 10% aqueous solution a pH of 5,5 to 7,5. In a further preferred embodiment, the rice starch used has a bulk density of 0,4 g/cm³.

In a preferred embodiment of the present invention, the rice starch has a particle size of 2 to 9 µm, preferably 2 to 8 µm.

In a preferred embodiment of the present invention, the rice starch is powdered.

In a preferred embodiment of the present invention, the at least one sugar alcohol is a mono- or disaccharide alcohol.

In a preferred embodiment of the present invention, the at least one sugar alcohol is selected from the group consisting of maltitol, xylitol, isomalt, which is a mixture of 1,6-GPS and 1,1-GPM of 43 to 57% 1,6-GPS and 57 to 43% 1,1-GPM, preferably a 1:1 mixture, sorbitol, erythritol, mannitol, lactitol, 1-O-α-D-Glucopyranosyl-D-sorbitol (1,1-GPS), 1-O-α-D-Glucopyranosyl-D-mannitol (1,1-GPM), 6-O-α-D-Glucopyranosyl-D-sorbitol (1,6-GPS), isomalt GS, which is a mixture of 72 to 78%, preferably 75%, 1,6-GPS and 22 to 28%, preferably 25% (all % given in weight of dry matter), 1,1-GPM, and a mixture of 1,1-GPM, 1,1-GPS and 1,6-GPS.

In a particularly preferred embodiment the sugar-alcohol is isomalt. In a further particularly preferred embodiment, the sugar-alcohol is isomalt GS.

In a preferred embodiment of the present invention, the product coating comprises 50 to 80 weight-% of the at least one sugar alcohol (based on dry weight of the product coating).

In the context of the present invention, a panning additive is any substance which may be added into the coating process to either influence the coating or panning process itself and/or influence product characteristics, which may either be relevant for the process or for the finally obtained product, for instance its organoleptic, sensoric, physiological, storage or optical behaviour.

In a preferred embodiment of the present invention, the at least one panning additive is selected from groups consisting of gum arabic, maltodextrin, corn syrup, gelatine, a cellulose-type material, potato starch, modified potato starch, vegetable gum, alginates, locus bean gum, guar gum, tragacanth gum, xanthan gum, calcium carbonate, SiO₂, TiO₂, magnesium carbonate, high intensity sweetener, flavouring, colorant, preserving agent, mineral salt, vitamine, active pharmaceutical ingredients and talc.

In a preferred embodiment of the present invention, the product coating comprises at least one high intensity sweetener as a panning additive.

In a preferred embodiment of the present invention, the product coating comprises a high intensity sweetener selected from the group consisting of thaumatin, stevioside, rebaudioside A, neohesperidin dihydrochalcone, acesulfam K, aspartame, cyclamate, saccharin, glycyrrhicine, alitame, monellin and sucralose.

In a preferred embodiment of the present invention, the product coating comprises 1 to 60 weight-%, preferably 1 to 45 weight-% (based on dry weight of the product coating) of the at least one panning additive.

In a preferred embodiment of the present invention, the product coating comprises 1 to 30 weight-% of the at least one panning additive (based on dry weight of the product coating).

In a particularly preferred embodiment of the present invention, the sugarless coated confectionery product comprises in its product coating 5 to 30 weight-% rice starch, 50 to 80 weight-% of the at least one sugar alcohol and 1 to 45 weight-% of the at least one panning additive (each based on dry weight of the product coating).

In a preferred embodiment of the present invention, the coated product comprises 15 to 70, preferably 25 to 45, weight-% product coating (based on dry weight of the overall coated product). Preferably, the coated product comprises 30 to 85, preferably 55 to 75 weight-% product core (based on the dry weight of the overall coated product).

In a particularly preferred embodiment, the product coating may comprise 1, 2 or more, for instance 50 to 100 layers of product coating material. In a particularly preferred embodiment, said layers may be of the same or different compositions.

In a preferred embodiment of the present invention, the product coating comprises rice starch, isomalt GS and gum arabic.

In a preferred embodiment of the present invention, the product coating comprises rice starch, maltitol and gum arabic.

In a preferred embodiment of the present invention, the product coating comprises rice starch, xylitol and gum arabic.

In a preferred embodiment of the present invention, the product core is selected from the group consisting of filled chewing gums, non-filled chewing gums, soft caramels, hard caramels, boiled candies, jelly gums, chewing candies, pressed candies and tablets. Preferably, the product core is a chewing gum.

According to the invention, it is provided that the product core, in particular the chewing gum core, can be produced by customary methods. After producing the product cores, in particular the chewing gum cores, the finished cores are preferably dragee-coated, with dragee-coating methods which are customarily used. In preferred embodiments, product cores can be subjected according to the present invention to a soft dragee coating or a hard dragee coating. A "soft dragee coating" means the application of the coating ingredients, in particular the sugar alcohol and the panning additive, optionally also the rice starch, dissolved or suspended in water to moving cores, in particular chewing gum cores, with, after each application, a powder of all or one of the coating ingredients being dispersed on to dry the coating layer, i.e. to bind the moisture, which regularly leads to a residual water content of 7 to 10% and a soft coating. This type of dragee coating produces a soft dragee coating. A "hard dragee coating" means, as in the soft dragee coating, the application of the coating ingredients dissolved or suspended in water onto moving cores, optionally with coating ingredients powder being applied, but rather the non-aqueous constituents being dried on using hot, warm or cold air, which leads to a residual water content of 1-5% and a hard coating. As in the soft dragee coating, preferably a multiplicity of different individual applications, called repetitions or cycles, are carried out, between which drying is performed with warm air or cold air, so that dragee coatings of different thicknesses can be produced. The hard dragee coating method can also be carried out using two or more different coating solutions which are applied successively.

In a preferred embodiment of the inventive method, the product core, in particular chewing gum core, is coated by means of at least one hard-dragee-coating step, with the layer comprising the rice starch. The hard-dragee coating step comprises applying a solution or suspension which comprises at least one sugar alcohol, rice starch and the panning additive, and subsequently drying the applied solution or suspension with an air stream.

In a further preferred embodiment of the inventive method the product core, in particular chewing gum core, is coated by means of at least one soft dragee-coating step, with the layer comprising the rice starch. The soft-dragee coating step comprises applying a solution or suspension which comprises at least one sugar alcohol and the panning additive, optionally also rice starch, and dusting the applied solution or suspension with a powder of sugar alcohol and/or rice starch, preferably rice starch. In a preferred embodiment, the applied solution or suspension comprises the total amount of the rice starch or a part thereof. In a preferred embodiment the rice starch is completely or partially introduced into the solution or suspension and is applied to the cores to be dragee-coated. In a further preferred embodiment, the powder comprises the total amount of the rice starch or a part thereof. In a preferred embodiment, the rice starch is completely or partially used as powder for dusting the solution or suspension applied to the product core.

The present invention also relates to a method for the preparation of a coated confectionery product, preferably of a coated product according to the above, wherein the product comprises a product core and a product coating and the coating comprises at least the coating ingredients at least one sugar alcohol, rice starch and at least one panning additive, which process comprises in a first step a) applying a coating medium comprising at least partially the coating ingredients to said product core, and b) drying the coated product, so as to obtain a product coating, which comprises 1 to 50 weight-% rice starch, 25 to 95 weight-% of at least one sugar alcohol and 1 to 70 weight-% (each based on dry weight of product coating) of at least one panning additive.

In a preferred embodiment of the present method, the drying of step b) is done by subjecting the coated product to air, in particular an air stream, preferably a constant air stream, having a temperature of 20°C to 80°C, preferably 30°C to 80°C.

In a preferred embodiment of the present method, the drying of step b) is done by adding part of the coating ingredients in dry and powdered form to the coated products during step b).

In a preferred embodiment of the present invention, the coating medium is a coating solution or coating suspension, in particular an aqueous solution or aqueous suspension, i.e. a solution or suspension of the coating ingredients in water.

Preferably, the solid content of the coating medium is from 30 to 90%, preferably 50 to 75%.

In a preferred embodiment, the coating medium has a temperature from 50 to 65°C, preferably 58°C to 63°C.

In a preferred embodiment of the present method, after step a) and before step b) the coated products are subjected to a distribution step, wherein the coated products are agitated to allow a homogenous distribution of the coating medium on the product core.

In a preferred embodiment of the present method, in step a) all coating ingredients are applied in form of a coating medium, in particular a coating suspension or a coating solution.

In a preferred embodiment of the present method, a part of the coating ingredients is applied in form of a coating medium and a further part is applied in dry and powdered form, both of them in step a). In a preferred embodiment of this alternative, a further part of the coating ingredients can be added in dry and powdered form additionally in step b).

In a preferred embodiment of the present method, all or part of the rice starch of the product coating is added in dry and powdered form, either in step a) or in step b) or in both steps a) and b).

In a preferred embodiment of the present method, at least a part of the at least one sugar alcohol is added in dry and powdered form, either in step a) or in step b) or in both steps a) and b).

In a preferred embodiment of the present method, preferably in a hard coating method, steps a) and b) are repeated one or more times (each time also being called a cycle), preferably 80 to 120 times. A preferred hard coating method of the present invention results in a residual water content of the coating from preferably 1 to 5% (by weight). In a preferred embodiment of the present invention, preferably in a soft coating method, steps a) and b) are repeated 3 to 10 times. A preferred soft coating method of the present invention results in a residual water content of the coating from preferably 7 to 10% (by weight).

In a preferred embodiment of the present method, the coating ingredients applied in dry and powder form represent 30 to 75% by weight, preferably 40 to 75% by weight of the overall amount of the coating ingredients (each based on dry weight of the product coating). Preferably, said 30 to 75% of dry and powdered from can be applied both in step a) and b) or in step a) alone or in step b) alone.

In a preferred embodiment of the present method comprising at least one repetition of steps a) and b), i.e. two cycles, it is foreseen that in a first phase of the method, the coating medium is applied in step a) and the drying is done in step b), the latter by adding part of the coating ingredients in dry and powdered form to the coated products one or more repeated times and wherein in a second phase of the method the coating medium is applied in step a) to the coated products and dried in step b) by subjecting the coated products to drying air one or more repeated times without the addition of dry and powdered coating ingredients. It is also possible to reverse the order of the first and second phase or to alternate the cycles consisting of steps a) and b) and a) alone.

In a preferred embodiment of the present method, the drying of step b) is done both by subjecting the coated product to air, preferably an air stream, having a temperature of 20 to 80°C and by adding part of the coating ingredients in dry and powdered form to the coated products during step b).

In a preferred embodiment of the present method, steps a) and b) are repeated 5 to 50 times.

In the context of the present invention, a dry and powdered form refers to dry particles in particular having a size of 90% < 100 µm, preferably < 50 µm.

In a preferred embodiment of the present invention, the sugar-alcohol added in dry and powdered form, in particular isomalt or isomalt GS, has a particle size distribution of 90% < 100 µm, preferably 90% < 50 µm.

In a furthermore preferred embodiment, it is foreseen that the coating ingredients are rice starch, at least one sugar alcohol and at least one panning additive, preferably as defined herein. Furthermore, it is preferred that all of the rice starch present in the final product coating is applied in powdered form in the coating process, that means during applying the further coating ingredients in the coating medium to the product core or subsequent thereto but before the drying step.

In a furthermore preferred embodiment, the present invention relates to a method for preparing the above-identified coated confectionery products comprising a product core and a product coating, which comprises in a first process step a) applying a coating medium, for instance a coating solution or a coating suspension, comprising a first part of the coating ingredients to the core for the purpose of applying one layer and then, in a second process step b) dusting with a second part of the coating ingredients, i.e. one or more of the coating ingredients in powder form, and drying, preferably with air, in particular an air stream, at 20 to 80°C, the coated cores, wherein the second part of the ingredients, in particular the rice starch, the at least one sugar alcohol and at least one panning additive, are applied in an amount from 30% to 75%, preferably 30% to 60%, preferably 40% to 55%, based on total solid content of the product coating, and wherein preferably said steps a) and b) are optionally repeated one or more times in alternation, preferably five to 50 time.

In a particularly preferred embodiment said steps a) and b) are repeated at least once, preferably 2 to 50 times.

In a particularly preferred embodiment, it is foreseen that in a first phase of cycles or repetitions, steps a) and b) are carried out and in a second phase of cycles or repetitions, step a) and the drying with air of step b) without dusting with powdered coating ingredients are carried out. Of course it is also possible that said order can be reversed or that repetitions comprising a) and the complete step b) are alternatively used to repetitions of a) and the partial step b).

Furthermore, it is also possible to foresee the above-identified process, wherein the drying is only performed by the dusting step b) without the use of air drying, i.e. without the use of a drying step comprising the use of an air steam.

The present invention also relates to the use of rice starch in the coating of coated products, in particular in the sugarless coating of coated products, for providing an improved, in particular prolonged, crunch.

In a further preferred embodiment, the present invention is directed to the use of rice starch in the coating of coated products, in particular in the sugarless coating of coated products, to provide an improved shelf life of said products.

Further preferred embodiments are characterised in the subclaims. The following examples and accompanying figures illustrate, but do not limit the present invention.

The figures show:
Figure 1 shows the result of a pH-telemetry measurement of plaques.
Figure 2 shows a coated chewing gum cushion of the present invention based on a rice starch and isomalt GS-coating in comparison to a control without rice starch.
Figure 3 shows a coated chewing gum cushion of the present invention based on a rice starch and maltitol coating in comparison to a control without rice starch
Figure 4 shows a coated chewing gum cushion of the present invention based on a rice starch and xylitol in comparison to a control without rice starch.

### Examples:

### Example 1 - coated chewing gum

### A) Composition of the coated chewing gum:

Center:

**table 1**

| Ingredient | Amount [% based on weight of center] |
|---|---|
| Glycerol | 1,78 |
| Water | 1,30 |
| Xylitol | 7,81 |
| Mannitol | 7,92 |
| Maltitol | 0,63 |
| Sorbitol | 44,40 |
| 1,1-Glucopyranosyl-mannitol (1,1-GPM) | 0,02 |
| 1,6-Glucopyranosyl-sorbitol (1,6-GPS) | 0,06 |
| Gum base | 36,08 |

Coating:

**table 2**

| Ingredient | Amount [% based on dry weight of coating] |
|---|---|
| Isomalt GS (75 weight-% 1,6-GPS, 25 weight-% 1,1-GPM) | 87,50 |
| Gum arabic | 1,40 |
| Rice starch | 11,10 |

### B) Coating with dry charged rice starch

A coating solution comprising as coating ingredients 5500 g isomalt GS, 410 g of a 50% gum arabic solution (205 g gum arabic, dry matter) and 3980 g water was prepared. Chewing gum cushions with a weight of 1,018 g/pc are provided. In a coating drum, the coating solution is applied to the chewing gum cushions at 60°C, wherein during said coating a mixture of isomalt GS/PA (powder, 90% of the particles < 50 µm) and 0, 1 % SiO₂ is sequentially added as powdery dry charges in a first phase in an amount of 2 x 160 g, in a second phase of 7 x 150 g and in a third phase of 4 x 170 g. The applied coating layers are dried after each cycle with a constant air stream having a temperature of 35 °C. Afterwards, the surface is dusted with dry and powdery rice starch (Remyline AXDR) in a fourth phase in an amount of 5 x 35 g, in a fifth phase of 5 x 35 g and in a sixth phase of 3 x 35 g. The applied coating layers are dried after each cycle with a constant air stream. Thus, in overall, a coated product is prepared comprising 33 weight-% coating and about 67 weight-% (each based on dry weight of final product) chewing gum centre.

### C) Physiological effects

The coated chewing gums prepared above have been tested on various human subjects using pH-telemetry (described in: Imfeld, Monographs in Oral Science, Identification of low caries risk dietary components, Karger, Basel, New York (1983), 11; Stösser et al., Oralprophylaxe, 12 (1990) 145-153; Stösser, Zahnärztliche Mitteilungen, 17 (1996) 32-35; Stösser et al., Oralprophylaxe, 25 (2005) 144-149). As a control, a 10% sucrose coating solution has been used.

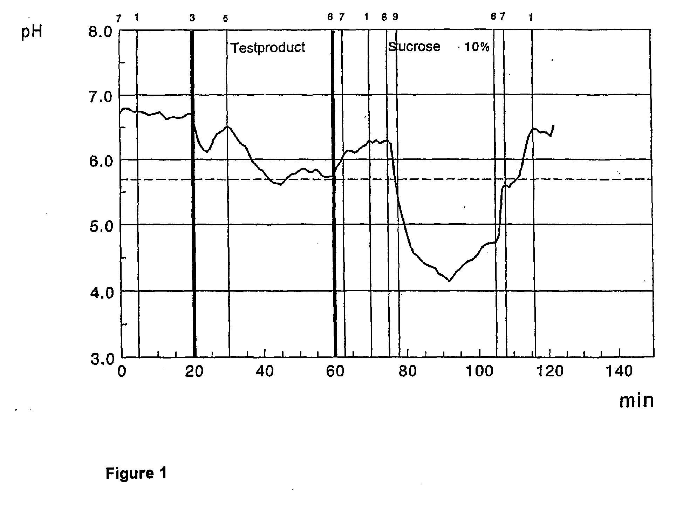

During the test the influence of the tested products on the pH of the dental plaque and the saliva was analysed. Chewing of neutral paraffin led to pH-values in the physiological expected area between pH 6 and 7, while the use of a sucrose solution led to a long-sustaining pH-decrease below 5,0. The intra-oral pH-test clearly showed that the chewing gums prepared above did not lead to a significant pH-decrease, in particular not to a pH-decrease below 5,0 until 30 minutes after consumption (Figure 1). The tables shown in figure 1 are:
1: rest-period-pH;
2: sucking phase;
3: chewing phase;
4: rinse-phase
5: test phase
6: water flushing/rinsing
7: chewing paraffin
8: rinsing with 10% sucrose
9: test phase sucrose.

### Example 2 - Coatings on chewing gums with and without rice starch

In this example, three coated products according to the present invention named V4, V5 and V6 have been prepared and compared to control products V7, V8 and V9, which lack rice starch.

### Recipes:

**table 3**

| Coating solution | V4 | V5 | V6 | V7, control | V8, control | V9, control |
|---|---|---|---|---|---|---|
| Isomalt GS | 6500 g | | | | 6500 g | |
| Maltitol P90 | | 6500 g | | | | 6500 g |
| Xylitol | | | 7400 g | 7400 g | | |
| Water | 2980 g | 3000 g | 2200 g | 2200 g | 2980 g | 3000 g |
| Gum Arabic * | 410 g | 410g | 410 g | 410g | 410 g | 410 g |
| Rice starch ** | 500 g | 500 g | 500 g | | | |
| Aspartame | 5 g | | | | 5 g | |
| Acesufame K | 5 g | | | | 5 g | |
| | | | | | | |
| Coating temperature | 55 °C | 65 °C | 60 °C | 60 °C | 55 °C | 65 °C |

| | | | | | | |
|---|---|---|---|---|---|---|
| * as a 50 % solution ** neutral white waxy rice starch powder (≥ 97% starch content, Remyline AXDR) | | | | | | |

### Center

Chewing gum cushions (weight-% on overall center weight: 1,78% glycerine, 1,30% water, 7,81 % xylitol, 7,92% mannitol, 0,63% maltitol, 44,4% sorbitol, 0,02% 1,1-GPM, 0,06% 1,6-GPS, 36,08% gum base); weight / piece = 1,04 g / charge size: 7,5 kg

### Process Data:

The coating was carried out as a hard coating process comprising the application of a coating solution and adding dry charges into the coating solution. The cores were dried in an air stream having a temperature of 30 °C and with a flow rate of 0.625 m³/min/kg chewing gum.

**table 4**

| | V4 | V5 | V6 | V7, control | V8, control | V9, control |
|---|---|---|---|---|---|---|
| Coating Time | 157 min | 216 min | 119 min | 134 min | 159 min | 213 min |
| Coated Layer (weight-% on overall chewing gum) | 33,8 % | 36,5 % | 33,9 % | 33,7 % | 33,0 % | 33,5 % |
| Drycharge * | 1 x 120 g | | | | 1 x 120 g | |
| | 5x90g | 6x50g | | | 5x90g | 6x50g |

| | | | | | | |
|---|---|---|---|---|---|---|
| * in Isomalt GS coatings: Isomalt ST/PF (50:50 mixture of 1,6-GPS and 1,1-GPM) added additionally as a powdery dry charge (90% of the particles < 100 µm) in maltitol coatings: Maltitol P 35 added additionally as a powdery dry charge; both dry charges added directly to the drum during the beginning of the coating process | | | | | | |

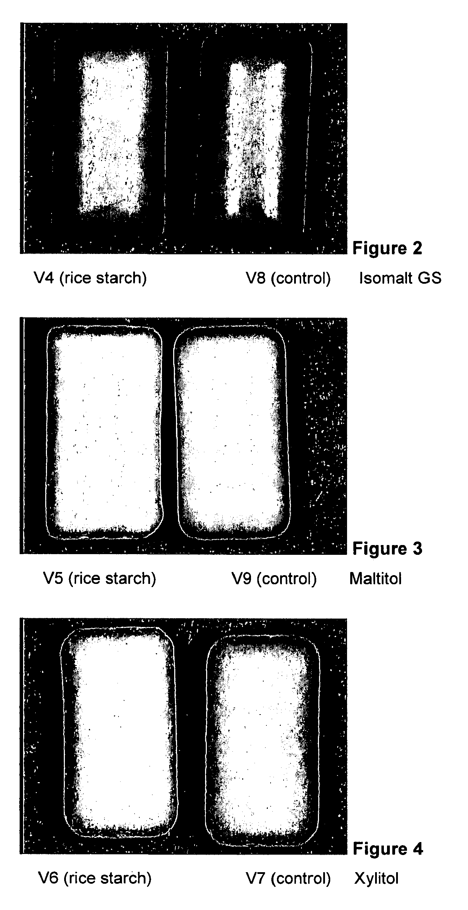

A comparison of the coated products for each of the three sugar alcohols Isomalt GS (V4), maltitol (V5) and xylitol (V6) with and without (V8, V9, V7) rice starch (Remyline AXDR (5 %)) in its coating shows a clear effect of the added rice starch (see figures 1 to 3). The surface of the chewing gums containing rice starch is lightened up compared to those without. Products V4 to V9 have also been tested by a panel of 11 people trained in sensoric evaluations. The products V4, V5 and V6 having a rice starch-containing coating showed a markedly improved crunch.

### Example 3 - coated chewing gums

Composition of the coated chewing gum:
Centre: The composition of the centre is described in Example 1,A, table 1 (1,018 g/pc).
Coating:

**table 5**

| Ingredient | Syrup |
|---|---|
| isomalt ST / M | 5500 g |
| gum Arabic solution (50%) | 410 g |
| aspartame | 5 g |
| acesulfame K | 5 g |
| water | 3980 g |
| titaniumdioxide | 50 g¹⁰ |
| liquid cap T-10-WSS-110 | 50 g |
| temperature | 60°C |

Coating was done with a syrup (suspension) according to table 5 and a dry charge mixture of powdery isomalt and rice starch. The following table 6 shows the coating scheme performed in a coating drum at 60°C. 2450 g of a 1:1 mixture (by weight) of isomalt ST/PF (isomalt < 100 µm) and rice starch (Remyline AXDR) is added successively in various phases and cycles in form of powdered dry charges (right column). The air stream used for drying had a flow rate of 0.625 m³/min/kg chewing gum. The proportion of rice starch in the final coating amounts to approximately 30%.

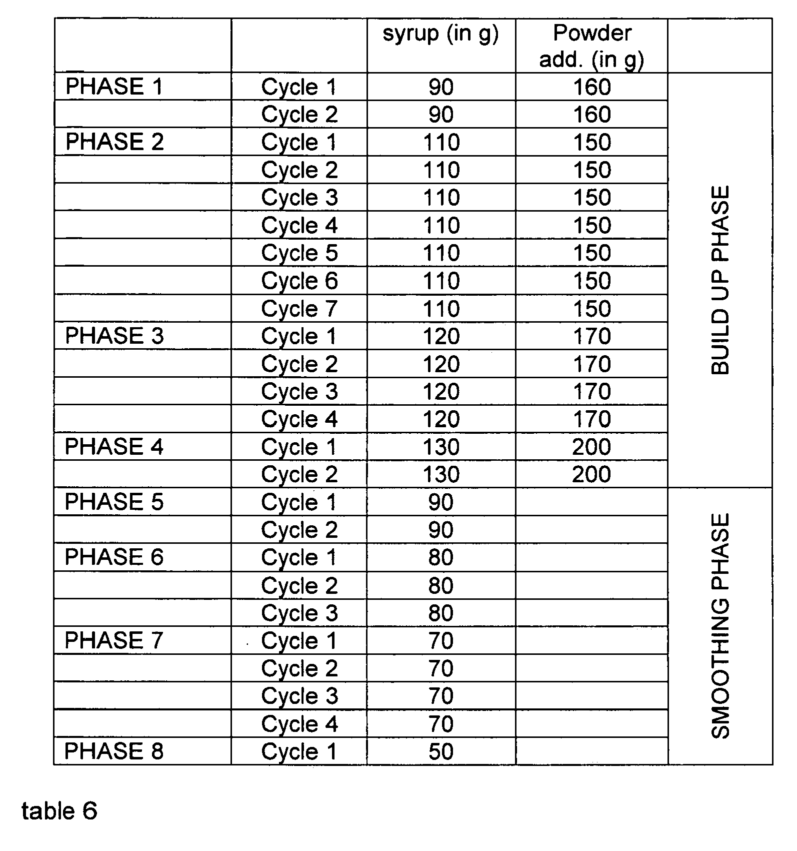

## Claims

1. Sugarless coated confectionery product comprising a product core and a product coating, wherein the product coating comprises 1 to 50 weight-% rice starch, 25 to 95 weight-% of at least one sugar alcohol and 1 to 70 weight-% (each based on dry weight of the product coating) of at least one panning additive.

2. The coated product of claim 1, wherein the product coating comprises 5 to 30 weight-% rice starch (based on dry weight of the product coating).

3. The coated product of claim 1 or 2, wherein the product coating comprises 5 to 15 weight-% rice starch (based on dry weight of the product coating).

4. The coated product of any one of claims 1 to 3, wherein the rice starch is selected from the group consisting of glutinous rice starch, non-glutinous rice starch, soluble glutinous rice starch, soluble non-glutinous rice starch and mixtures thereof.

5. The coated product of any one of claims 1 to 4, wherein the rice starch has a particle size of 2 to 8 µm.

6. The coated product of any one of claims 1 to 5, wherein the rice starch is powdered.

7. The coated product of any one of claims 1 to 6, wherein the at least one sugar alcohol is a mono- or disaccharide alcohol.

8. The coated product according to any one of the preceding claims, wherein the at least one sugar alcohol is selected from the group consisting of maltitol, xylitol, isomalt, sorbitol, erythritol, mannitol, lactitol, 1-O-α-D-Glucopyranosyl-D-sorbitol (1,1-GPS), 1-O-α-D-Glucopyranosyl-D-mannitol (1,1-GPM), 6-O-α-D-Glucopyranosyl-D-sorbitol (1,6-GPS), isomalt GS and a mixture of 1,1-GPM, 1,1-GPS and 1,6-GPS.

9. The coated product according to any one of the preceding claims, wherein the product coating comprises 50 to 80 weight-% of the at least one sugar alcohol (based on dry weight of the product coating).

10. The coated product according to any one of the preceding claims, wherein the at least one panning additive is selected from group consisting of gum arabic, maltodextrin, corn syrup, gelatine, a cellulose-type material, potato starch, modified potato starch, vegetable gum, alginates, locust bean gum, guar gum, tragacanth gum, xanthan gum, calcium carbonate, SiO₂, TiO₂, magnesium carbonate and talc.

11. The coated product according to any one of the preceding claims, wherein the product coating comprises 1 to 60 weight-% (based on dry weight of the product coating) of the at least one panning additive.

12. The coated product according to any one of the preceding claims, wherein the product coating comprises 1 to 45 weight-% (based on dry weight of the product coating) of the at least one panning additive.

13. The coated product according to any one of the preceding claims, wherein the coated product comprises 15 to 70 weight-% product coating (based on dry weight of the coated product).

14. The coated product according to any one of the preceding claims, wherein the product coating comprises rice starch, isomalt GS and gum arabic.

15. The coated product according to any one of the preceding claims, wherein the product coating comprises rice starch, maltitol and gum arabic.

16. The coated product according to any one of the preceding claims, wherein the product coating comprises rice starch, xylitol and gum arabic.

17. The coated product according to any one of the preceding claims, wherein the product core is selected from the group consisting of filled chewing gums, non-filled chewing gums, soft caramels, hard caramels, boiled candies, jelly gums, chewing candies, pressed candies and tablets.

18. The coated product according to any one of the preceding claims, wherein the product coating comprises at least one high intensity sweetener.

19. The coated product according to any one of the preceding claims, wherein the product coating comprises a high intensity sweetener selected from the group consisting of thaumatin, stevioside, rebaudioside A, neohesperidin dihydrochalcone, acesulfam K, aspartame, cyclamate, saccharin, glycyrrhicine, alitame, monellin and sucralose.

20. A method for the preparation of a coated confectionery product comprising a product core and a product coating, the coating comprising at least the coating ingredients at least one sugar alcohol, rice starch and at least one panning additive, preferably according to claims 1 to 19, which comprises in a first step a) applying a coating medium comprising at least partially the coating ingredients to said product core, and b) drying the coated product, so as to obtain a product coating, which comprises 1 to 50 weight-% rice starch, 25 to 95 weight-% of at least one sugar alcohol and 1 to 70 weight-% (each based on dry weight of product coating) of at least one panning additive.

21. The method of claim 20, therein the drying of step b) is done by subjecting the coated product to air, in particular an air stream, having a temperature of 20°C to 80°C, preferably 30°C to 80°C.

22. The method of claim 20 or 21, wherein the drying of step b) is done by adding part of the coating ingredients in dry and powdered form to the coated products during step b).

23. The method of claims 20 to 22, wherein the coating medium is a coating solution or coating suspension.

24. The method according to claims 20 to 23, wherein after step
a) and before step b) the coated products are subjected to a distribution step, wherein the coated products are agitated to allow a homogenous distribution of the coating medium on the product core.

25. The method according to any one of claims 20 to 24, wherein in step a) all coating ingredients are applied in form of a coating medium, in particular a coating suspension or a coating solution.

26. The method according to any one of claims 20 to 24, wherein a part of the coating ingredients is applied in form of a coating medium and a further part is applied in dry and powdered form, both of them in step a).

27. The method according to any one of claims 20 to 24 and 26, wherein all or part of the rice starch of the product coating is added in dry and powdered form.

28. The method according to any one of claims 20 to 24, 26 or 27, wherein at least a part of the at least one sugar alcohol is added in dry and powdered form.

29. The method of any one of claims 20 to 28, wherein steps a) and b) are repeated one or more times, preferably 8 to 120 times.

30. The method according to any one of claims 20 to 28, wherein steps a) and b) are repeated 3 to 10 times.

31. The method according to any one of claims 20 to 24 and 26 to 30, wherein the coating ingredients applied in powder form represent 30 to 75% by weight, preferably 40 to 75% by weight of the overall amount of the coating ingredients (each based on dry weight of the product coating).

32. The method according to any one of claims 20 to 24 and 26 to 31, wherein the method is carried out in at least two phases, wherein in a first phase of the method, the coating medium is applied in step a) and the drying is done in step b) by adding part of the coating ingredients in dry and powdered form to the coated products one or more repeated times and wherein in a second phase of the method the coating medium is applied to the coated products in step a) and dried in step b) by subjecting the coated products to air without addition of dry and powdered coating ingredients one or several times.

33. The method according to any one of claims 20 to 24 and 26 to 32, wherein the drying of step b) is done both by subjecting the coated product to air having a temperature of 20 to 80°C and by adding part of the coating ingredients in dry and powdered form to the coated products during step b).

34. The method according to any one of claims 31 to 33, wherein steps a) and b) are repeated 3 to 50 times.

35. The method according to claim 34, wherein in a first phase of the repetitions of steps a) and b) the drying of step b) is done by adding part of the coating ingredients in dry and powdered form to the coated products and wherein in a second phase of the repetitions only the coating medium is applied and the drying of step b) is done by subjecting the coated product to air having a temperature of 20 to 80°C.
